**Europäisches Patentamt**

**European Patent Office**

**Office européen des brevets**

(19)

(11) Veröffentlichungsnummer : **0 062 092**
**B1**

(12) **EUROPÄISCHE PATENTSCHRIFT**

(45) Veröffentlichungstag der Patentschrift :
01.10.86

(21) Anmeldenummer : 81108160.3

(22) Anmeldetag : 10.10.81

(51) Int. Cl.⁴ : **F 27 B 15/16, F 27 B 15/00**

(54) Wirbelschichtfeuerung mit einem Aschekühler.

(30) Priorität : 27.03.81 DE 3112120

(43) Veröffentlichungstag der Anmeldung :
13.10.82 Patentblatt 82/41

(45) Bekanntmachung des Hinweises auf die Patenterteilung : 01.10.86 Patentblatt 86/40

(84) Benannte Vertragsstaaten :
AT BE CH FR GB IT LI NL SE

(56) Entgegenhaltungen :
EP-A- 0 012 857
FR-A- 2 353 332
GB-A- 317 470
GB-A- 2 032 598

(73) Patentinhaber : **Deutsche Babcock Aktiengesellschaft
Patent- und Lizenzabteilung Duisburger Strasse 375
D-4200 Oberhausen 1 (DE)**

(72) Erfinder : **Winkler, Wolfgang
Kiwittenberg 25
D-4200 Oberhausen 1 (DE)**
Erfinder : **Giertz, Franz
Fichtenhain 8
D-4030 Ratingen 5 (DE)**
Erfinder : **Buttkereit, Hartmut
Bismarkstrasse 44
D-4020 Mettmann (DE)**

EP 0 062 092 B1

Jouve, 18, rue St-Denis, 75001 Paris, France

## Beschreibung

Die Erfindung betrifft ein Verfahren zum Kühlen von Asche, die aus einer Wirbelschichtfeuerung über Überlaufrohre in einen mit einem Anströmboden und mit Wärmetauscherflächen versehenen Aschekühler abgeführt wird.

Bei bekannten Wirbelschichtfeuerungen dieser Art (GB-A-2 032 598 ; Energie 31 (1979) Seiten 240 bis 243) ist der Aschekühler entweder als Rieselkühler oder als Wirbelschichtkühler ausgebildet. Jeder dieser Aschekühler kann aber nur wirtschaftlich auf einen begrenzten Lastbereich ausgelegt werden.

Bei dieser Auslegung des Aschekühlers für eine Wirbelschichtfeuerung sind im wesentlichen zwei Betriebszustände zu unterscheiden. Der erste Betriebszustand ist der kontinuierliche Betrieb bei gleicher Last. Dabei muß über eine längere Betriebszeit eine konstante Wirbelschichthöhe eingehalten werden. Die in diesem Zeitraum anfallende Aschemenge muß aus der Wirbelschicht abgezogen und in dem Aschekühler vor dem Abtransport gekühlt werden. Der zweite Betriebszustand tritt bei Lastsenkung durch einen Abzug des Schichtmaterials aus der Wirbelschichtfeuerung ein. Er unterscheidet sich von dem kontinuierlichen Betrieb dadurch, daß über einen relativ kurzen Zeitraum eine der Laständerungsgeschwindigkeit entsprechend hohe Aschemenge abgezogen und gekühlt werden muß. Diese Aschemenge kann ein Vielfaches der bei kontinuierlichem Betrieb anfallenden Aschemenge erreichen. Dieser erhöhte Ascheanfall muß unter Kühlung ebenfalls durch den vorzusehenden Aschekühler durchgesetzt werden können.

Der Erfindung liegt die Aufgabe zugrunde, den Aufwand und den nötigen Kraftbedarf für die Aschekühlung so gering wie möglich zu halten und die beiden genannten Betriebszustände mit einem Kühlsystem zu beherrschen. Diese Aufgabe wird ausgehend von einem zum Kühlen von Asche geeigneten Verfahren der eingangs genannten Art erfindungsgemäß dadurch gelöst, daß die Asche bei einer Lastabsenkung in der Wirbelschichtfeuerung durch Zufuhr eines Wirbelmediums fluidisiert und bei kontinuierlichem Betrieb der Wirbelschichtfeuerung bei abgeschalteter Wirbelmediumszufuhr als freie Schüttung über die Wärmetauscherflächen geführt wird.

Gemäß der Erfindung kann ein und derselbe Aschekühler als Rieselkühler oder als Wirbelschichtkühler betrieben werden. Für den Betriebszustand « Lastsenkung » wird der Wirbelschichtkühler eingesetzt, der aufgrund hoher Wärmedurchganskoeffizienten eine vertretbare Baugröße des Aschekühlers ermöglicht. Für den kontinuierlichen Betrieb kann der Wirbelschichtkühler als Rieselkühler benutzt und somit der notwendige Kraftbedarf für die Kühlung minimiert werden.

Weitere vorteilhafte Ausgestaltungen der Erfindung sind in den Unteransprüchen enthalten.

Ein Ausführungsbeispiel der Erfindung ist in der Zeichnung dargestellt und wird im folgenden näher erläutert. Es zeigen :

Figur 1 den Längsschnitt durch eine Wirbelschichtfeuerung mit einem Aschekühler gemäß der Erfindung, der als Wirbelschichtkühler betrieben ist und

Figur 2 den gleichen Gegenstand, wobei jedoch der Aschekühler als Rieselkühler dient.

Die Wirbelschichtfeuerung umfaßt eine nur teilweise dargestellte Wirbelschichtbrennkammer 1 mit einer Wirbelschicht 2 oberhalb eines Anströmbodens 3. Die als Wirbelmedium dienende Verbrennungsluft wird einem Luftkasten 4 zugeführt und durch Öffnungen im Anströmboden 3 in die Wirbelschicht 2 eingeblasen. An die Wirbelschichtbrennkammer 1 schließt sich ein nicht dargestellter Abhitzekessel an, in dem Heizflächen angeordnet sind. Weitere Heizflächen können in der Wirbelschicht 2 und in dem Freiraum der Brennkammer 1 oberhalb der wirbelschicht 2 vorgesehen sein. Ebenso können die Seitenwände der Wirbelschichtbrennkammer 1 aus gekühlten Rohren gebildet sein.

Die bei der Verbrennung entstehende Asche wird aus der Wirbelschicht 2 abgezogen und einem Aschekühler 5 zugeführt. Der Aschekühler 5 ist mit einem Abzugsrohr 6 versehen, in dem als Austragsorgan ein Zellenrad 7 angeordnet ist. Die in der Asche enthaltene Wärme wird ihr durch Wärmetauscherflächen 8 entzogen, die als Rohrbündel innerhalb des Aschekühlers 5 verlegt sind.

Der Aschekühler 5 weist oberhalb einer Zuführungsleitung 9 für ein Wirbelmedium einen Anströmboden 10 auf. In der Zuführungsleitung 9 ist eine Absperrklappe 11 angeordnet, durch die die Zufuhr des Wirbelmediums freigegeben oder abgesperrt werden kann. Als Wirbelmedium wird Luft verwendet. Der obere Abschluß des Aschekühlers 5 ist über einen Kanal 12 mit der Wirbelschichtbrennkammer 1 verbunden. In dem Kanal 12 ist eine Absperrklappe 13 angeordnet.

Der Aschekühler 5 ist etwa auf dem gleichen Niveau angeordnet, auf dem sich die Wirbelschicht 2 der Wirbelschichtfeuerung befindet. Dabei liegt der Anströmboden 10 des Aschekühlers 5 zweckmäßigerweise etwas tiefer als der Anströmboden 3 der Wirbelschicht 2. Der Aschekühler 5 ist mit der Wirbelschicht 2 durch ein oder mehrere Überlaufrohre 14 verbunden. Über diese Überlaufrohre 14 tritt die Asche aus der Wirbelschicht 2 in den Aschekühler 5 ein. Die Überlaufrohre 14 sind in der Wand der Wirbelschichtbrennkammer 1 in einer Höhe oberhalb des Anströmbodens 3 vorgesehen, die geringer ist als die bei Mindestlast der Wirbelschichtfeuerung eingehaltene Höhe der Wirbelschicht 2. Gleichzeitig befindet sich zumindest ein Teil der Wärmetauscherflächen 8 des Aschekühlers 5 unterhalb des Eintrittes der Überlaufrohre 14 in den Aschekühler 5.

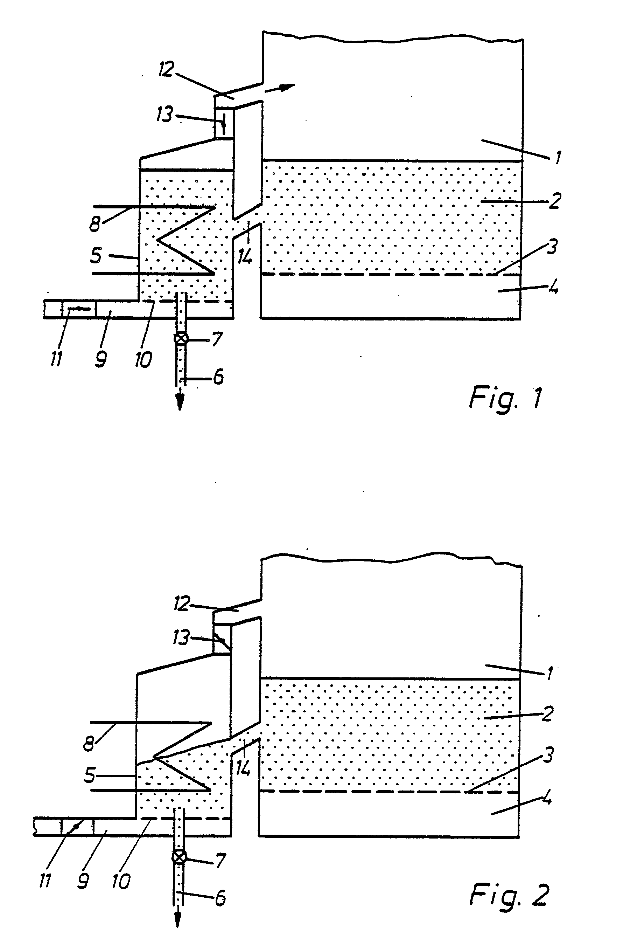

Der Aschekühler 5 wird bei kontinuierlichem Betrieb der Wirbelschichtfeuerung als Rieselkühler betrieben (Fig. 2). Dazu wird das Wirbelmedium über die Absperklappe 11 in der Zuführungsleitung 9 abgestellt. Die Absperrklappe 13 in dem Kanal 12 zwischen dem Aschekühler 5 und der Wirbelschichtbrennkammer 1 wird geschlossen. Die während des kontinuierlichen Betriebes der Wirbelschichtfeuerung anfallende Aschemenge rieselt in freier Schüttung unter Ausbildung eines Schüttkegels an den Wärmetauscherflächen 8 des Aschekühlers 5 entlang, kühlt sich dabei auf die gewünschte Temperatur ab und wird über das Abzugsrohr 6 mit Hilfe des Zellenrades 7 abgezogen.

Bei einer Absenkung der Last der Wirbelschichtfeuerung wird die Höhe der Wirbelschicht 2 gesenkt, so daß große Mengen an Asche abgeführt werden müssen. Für diesen Betriebszustand wird der Aschekühler 5 als Wirbelschichtkühler betrieben. Durch ein Öffnen der Absperrklappe 11 in der Zuführungsleitung 9 wird Luft als Wirbelmedium durch den Anströmboden 10 in den Aschekühler 5 eingeblasen. Die Absperrklappe 13 in dem Kanal 12 wird geöffnet und so eine gasseitige Verbindung zwischen dem Aschekühler 5 und der Wirbelschichtbrennkammer 1 hergestellt. Durch die besondere Anordnung des Aschekühlers 5 und die spezifischen Eigenschaften einer Wirbelschicht ist es möglich, diesen Wirbelschichtkühler nach dem Prinzip der kommunizierenden Röhren arbeiten zu lassen. Sobald die Asche in dem Aschekühler 5 fluidisiert wird, gleicht sich der Aschespiegel im Aschekühler 5 dem der Wirbelschicht 2 der Wirbelschichtfeuerung an. Die nun zur Verfügung stehende größere Wärmetauscherfläche, in Zusammenhang mit den guten Wärmeübertragungsverhältnissen in einer Wirbelschicht, ermöglichen die Kühlung großer Aschemengen bei einem relativ kleinen Kühlervolumen. Da die als Wirbelmedium dienende Luft über den Kanal 12 wieder der Rauchgasseite der Wirbelschichtfeuerung zugemischt werden kann, treten luftseitig nur geringe Verluste auf und es entfallen die sonst notwendigen, zusätzlichen Staubabscheidesysteme. Die Absenkung des Wirbelschichtspiegels in dem Aschekühler 5 erfolgt über das Abzugsrohr 6 mit Hilfe des Zellenrades 7.

**Patentansprüche**

1. Verfahren zum Kühlen von Asche, die aus einer Wirbelschichtfeuerung über Überlaufrohre in einen mit einem Anströmboden und mit Wärmetauscherflächen versehenen Aschekühler abgeführt wird, dadurch gekennzeichnet, daß die Asche bei einer Lastabsenkung in der Wirbelschichtfeuerung durch Zufuhr eines Wirbelmediums fluidisiert und bei kontinuierlichem Betrieb der Wirbelschichtfeuerung bei abgeschalteter Wirbelmediumzufuhr als freie Schüttung über die Wärmetauscherflächen geführt wird.

2. Verfahren nach Anspruch 1, dadurch gekennzeichnet, daß der Aschekühler und die Überlaufrohre in etwa auf dem gleichen Niveau wie die Wirbelschicht der Wirbelschichtfeuerung angeordnet sind und daß die Wärmetauscherflächen des Aschekühlers zumindest teilweise tiefer liegen als die Überlaufrohre.

3. Verfahren nach den Ansprüchen 1 und 2, dadurch gekennzeichnet, daß die Überlaufrohre in einer Höhe oberhalb des Anströmbodens der Wirbelschicht vorgesehen sind, die geringer ist als die bei Mindestlast der Wirbelschichtfeuerung eingehaltene Höhe der Wirbelschicht.

4. Verfahren nach den Ansprüchen 1 bis 3, dadurch gekennzeichnet, daß der obere Abschluß des Aschekühlers mit der Wirbelschichtbrennkammer oberhalb der Wirbelschicht über einen absperrbaren Kanal verbunden ist.

**Claims**

1. Method for cooling of the ash which, through overflow tubes, is discharged from a fluidized bed combustor into an ash cooler provided with distributor plate and heat-exchange surfaces characterized by the ash which on load reduction in the fluidized bed combustor is fluidized by a fluidizing agent supplied and in case of continuous operation of the fluidized bed combustor on disconnection of the fluidizing agent supply is distributed in bulk over the heat-exchange surfaces.

2. Method according to claim 1 characterized by the ash cooler and overflow tubes which are arranged at more or less the same level as the fluidized bed of the fluidized bed combustor, and the heat-exchange surfaces of the ash cooler which are located, at least in part, at a lower level than the overflow tubes.

3. Method according to claims 1 and 2 characterized by the overflow tubes which are provided at a level above the distributor plate of the fluidized bed which is smaller than the height of the fluidized bed maintained at the minimum load of the fluidized bed combustor.

4. Method according to claims 1 to 3 characterized by the upper connection of the ash cooler with the fluidized bed combustion chamber which is connected above the fluidized bed by means of a lockable duct.

**Revendications**

1. Procédé de refroidissement des cendres, évacuées par des goulottes, d'un foyer à couche fluidisée vers un refroidisseur de cendres équipé d'une grille de soufflage et de surfaces d'échange thermique, caractérisé en ce que les cendres sont, lors d'un abaissement de la charge du foyer à couche fluidisée, soumises à un effet de fluidification par l'arrivée d'un fluide approprié et, en fonctionnement continu, l'arrivée de ce fluide étant alors coupée, déversées par gravité sur les surfaces d'échange thermique.

2. Procédé selon la revendication 1, caractérisé en ce que le refroidisseur de cendres et les goulottes se situent à peu près au même niveau que la couche fluidisée du foyer et qu'une partie au moins des surfaces d'échange thermique se situe plus bas que les goulottes.

3. Procédé selon l'une des revendications 1 et 2, caractérisé en ce que les goulottes débouchent au-dessus de la grille de soufflage de la couche fluidisée, la distance verticale qui les sépare de cette grille de soufflage étant inférieure à l'épaisseur à laquelle est maintenue la couche fluidisée lorsque le foyer travaille en charge minimale.

4. Procédé selon les revendications 1 à 3, caractérisé en ce que l'extrémité supérieure du refroidisseur de cendres est raccordée à la chambre de combustion, au-dessus de la couche fluidisée, par une gaine de liaison équipée d'un dispositif de fermeture.

0 062 092

Fig. 1

Fig. 2